# EUROPEAN PATENT APPLICATION

(11) **EP 1 079 539 A2**
(43) Date of publication of application: **28.02.2001**
(21) Application number: 00118108.0
(22) Date of filing: 25.08.2000
(51) Int. Cl.: H04B 7/005

(54) **Communication apparatus having a transmission power controller**

(30) Priority: 25.08.1999 JP 23768999
(71) Applicant: NEC CORPORATION, Tokyo (JP)
(72) Inventor: Sano, Hideo, Minato-ku, Tokyo (JP)
(74) Representative: VOSSIUS & PARTNER

(57) **Abstract**

In a code division multiple access communication apparatus, a transmission power is controlled based on transmission power control data which is included in a reception signal. A fading timing estimator estimates a reception level reduction timing when a reception level of the reception signal is low than a predetermined level due to fading. When the transmission power control data is received at the estimated reception level reduction timing, the transmission power determiner determines the transmission power without using the transmission power control data.

## Description

The present invention relates to a communication apparatus having a transmission power controller. In particular, it replaces to a communication apparatus having a transmission power controller capable of being applied to a mobile cellular phone using a direct sequence code division multiple access (DS-CDMA) system.

Conventionally, code division multiple access (CDMA) communication systems can be classified into a direct sequence (DS) mode for spreading a modulated signal by using a high rate spread code and a frequency hopping (FH) mode. In the FH mode, one symbol must be decomposed in a unit called a chip and switched to a signal having a central frequency which is different in accordance with each chip at high speed, whereby realization of the apparatus is difficult. Therefore, the DS mode is hence conventionally adopted to CDMA communication systems. In a radio communication apparatus using a spread spectrum (SS) technologies, secondary modulation is performed using a spread code after regular modulation and a signal frequency band is spread to carry out transmission on a transmitter side. On a receiver side, a reception signal in a broad band is first returned to a signal in a narrow band by a despread process and a conventional demodulation process is then conducted. In the CDMA communication systems, since a common frequency band is used to perform communications among a plurality of subscribers, a capacity of subscribers in a cell is determined by a signal-to-interference plus noise power ratio (SIR) required for obtaining a necessary error ratio.

Here, a problem of applying the CDMA technologies to mobile communication systems lies in that a received signal level from each mobile station at a base station largely differs depending on a location of each mobile station and "a far-to-near problem" that a signal with a large power interferes with and masks a signal with a small power occurs. In the CDMA communication systems, since a plurality of subscribers share the same frequency band, a signal of one subscriber acts as an interference signal to deteriorate communication quality of a channel of another subscriber. In particular, the interference in the far-to-near problem leads to reduction in a number of multi-stations in a cell.

As a technique for solving this far-to-near problem, transmission power control has been conventionally performed. The conventional transmission power control is carried out in such a manner that a reception power received by a reception station or a signal-to-interference plus noise power ratio (SIR) determined by the reception power becomes constant irrespective of a location of each mobile station, thereby obtaining uniform communication quality in a service area. In particular, each mobile station controls its transmission power with respect to an up channel the direction of which is from the mobile station to the base station so that a reception power of a reception signal at the base station from each mobile station becomes the same level to each other. In the CDMA communication systems which requires evenly reducing interference powers with respect to every mobile station, an error in the transmission power from each mobile station is a most important factor for determining a capacity of subscribers per one cell. For example, if there is a transmission power error of 1 dB, the capacity of subscribers is reduced approximately 30%.

The conventional transmission power control method is disclosed in Japanese patent laid-open publication No. Hei 8-125604 (which is referred to as Reference 1 hereinafter) and Japanese patent laid-open publication No. Hei 11-4213 (which is referred to as Reference 2 hereinafter). In Reference 1, a communication channel for transmitting information data and a transmission power control channel for transmitting transmission power control data are provided in parallel, whereby a transmission power can be controlled so that it keeps up with the Doppler frequency or a level change of a reception signal caused by high-speed Rayleigh fading. According to the Reference 1, when a spread coefficient of the transmission power control channel is the m-times (m is integer greater than 1) of that of the communication channel, the increases in a down-link transmission power to one mobile station from the base station can be suppressed to approximately (1+1/m)-times, thereby minimizing the reduction in the capacity of subscribers to the system.

When the communication channel and the transmission power control channel are provided in series, it is determined by an information insertion cycle into the transmission power control channel whether the transmission control can be controlled with keeping up with the Doppler frequency caused by Rayleigh fading. For example, the transmission power control is carried out in a cycle of 0.1 ms under conditions of one frame 10 ms, a carrier frequency 2 GHz and a vehicle speed 120 km/h. Therefore, in the above-described transmission power control method for inserting the transmission power control information into a down-link frame from the base station to the mobile station by a fixed period, the transmission power control information insertion cycle into the frame must be increased in order to carry out the transmission power control in pursuit of the level change of the reception signal caused by the high-speed fading, and the frame efficiency is consequently reduced and the overhead of the frame is increased, thereby disabling transmission of information data at a required transmission rate.

In the conventional technique disclosed in Reference 2, the attention is directed to information of a transmission power control channel, and there is provided a fading cycle calculator which obtains a relative transmission power based on a transmission power displacement of the transmission power control channel to calculate a fading cycle from the history of the relative transmission power. The fading cycle calculator invalidates instantaneous updating of the transmission power if the fading cycle is high-speed and close to the transmission power control cycle. This conventional technique is performed wherein the information data channel and the transmission power control channel are provided in series.

Moreover, other conventional transmission power control methods are disclosed in Japanese parent laid-open publication No. Hei 9-284205; Japanese patent laid-open publication No. Hei 9-312609, Japenese patent laid-open publication No. Hei 11-17593 and Japanese patent publication No. 2656198. For example, in Japanese patent laid-open publication No. Hei 11-17593, a fading signal value is estimated based on a Doppler frequency and the fading signal value is added to a predetermined transmission power level to calculate a transmission power control value. The estimation and calculation processes of the reference are complicated.

When a transmission power control is carried out using information of a transmission power control channel wherein a received signal level is lowered due to fading, the transmission power control is not precisely performed. The information of the transmission power control channel does not include the processing for improving durability to an error such as error correction codes because it has to be processed at high-speed. Therefore, an error is mixed in decoding data, due to reduction in the reception level and the transmission power control is carried out by using the erroneous data. Consequently, the transmission power control may be performed so as to extremely increase or decrease the transmisssion power because of use of the erroneous data. If the transmission power level is extremely lowered, a signal level at which a communication party executes reception is reduced, thereby necessarily degrading a data transmission quality. Further, transmission with a excessive power increases the interference against other parties.

Moreover, in the case where the communication channel and the transmission power control channel are provided in series as disclosed in Reference 2, there is a problem that a minimum fading cycle which can be estimated based on an insertion cycle of the transmission power control information into the transmission power control channel is disadvantageously determined by the insertion cycle. Therefore, accuracy for detecting the high-speed fading cycle is deteriorated, whereby the conventional transmission power control method cannot control to invalidate updating of the transmission power in pursuit of high-speed fading when the reception level is lowered. That in because the accuracy for the high-speed fading cycle can not be obtained by insufficiency of the transmission power control data when monitoring the fading frequency with the accuracy not less than the insertion cycle of the transmission control data even though the data of the transmission power control channel is utilized, to estimate the fading cycle. Further, although the fading frequency is calculated based on the history information of control of the transmission power channel, the information of the transmission power control channel depends on radio wave environment, and the accuracy for estimating the fading frequency is lowered under the influence of periodic increase/decrease in the interference.

It is therefore an object of the present invention to provide a communication apparatus capable of accurately controlling a transmission power even if transmission power control data includes an error.

Another object of the present invention is to provide a communication apparatus capable of assuring the high quality in data transmission and the high capacity of subscribers in a cell.

In order to achieve the above objects, a communication apparatus according to an embodiment of the present invention comprises a receiver that receives a signal including transmission power control information, a timing estimator that estimates a level reduction timing when a reception level of the signal is lower than a predetermined level, and a transmission power controller coupled to the receiver and the timing estimator, that determines a transmission power without using the transmission power control information which is received at the level reduction timing estimated by the timing estimator.

In order to achieve the above objects, a mobile communication system according to an embodiment of the present invention comprises a base station that transmits transmission power control information, a mobile station that receives the transmission power control information and transmits data to the base station with a transmission power which is determined based on the transmission power control information; wherein the mobile station comprises, an timing estimator estimating a level reduction timing when a reception level of the transmission power control information is lower than a predetermined level, and a transmission power determiner determining the transmission power without using the transmission power control information which is received at the level reduction timing.

In order to achieve the above objects, a method for controlling transmission power of a communication apparatus according to an embodiment of the present invention comprises receiving a signal having transmission power control information, estimating a level reduction timing when a reception level of the signal is lower than a predetermined level, and controlling transmission power without using the transmission power control information which is received at the level reduction timing.

These and other objects, features and advantages of this invention will become more fully apparent from the following detailed description taken with the accompanying drawings in which:
FIG. 1 is a block diagrams showing an embodiment of a communication system according to the present invention;
FIG. 2 is a block diagram showing an embodiment of a transmission power controller according to the present invention;
FIG. 3 is a block diagram showing an embodiment of a transmission power controller according to the present invention; and
FIG. 4 is a flowchart showing an operation of a transmission power controller according to the present invention.

The preferred embodiments of the present invention will be discussed by referring to the drawings.

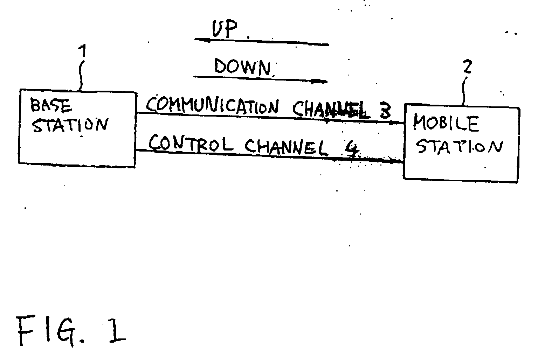

Referring to FIG. 1, a communication system to which a transmission power controller according to the present invention can be applied is constituted by a base station 1 and a mobile station 2, and the both stations 1 and 2 are connected to each other by radio. Further, the communication system includes a code division multiple access (CDMA) mobile communication system using spread spectrum technologies. In the CDMA mobile communication system, a communication channel 3, a transmission power of which is controlled at predetermined time intervals and a control channel 4 constantly transmitted with a predetermined transmission power without performing transmission power control are simultaneously transmitted from the base station 1 to the mobile station 2. That is, the communication channel 3 and the control channel are provided in parallel..

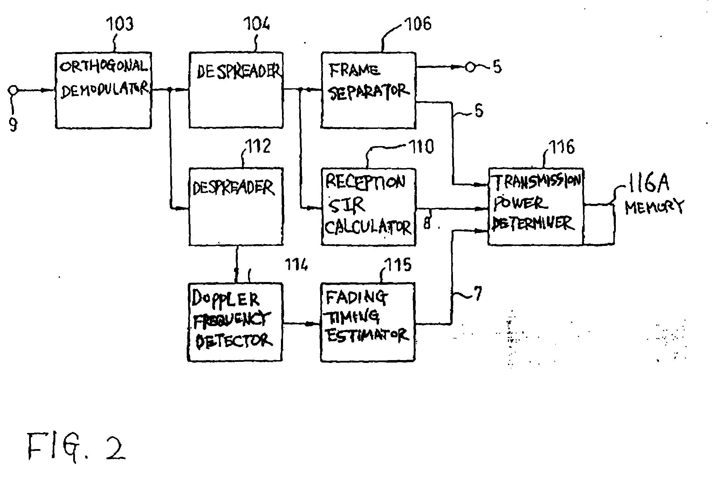

Referring to FIG. 2, a CDMA transmission power controller according to the present invention comprises an orthogonal demodulator 103 for performing orthogonal detection of a received signal 9, a despreader 104 for performing despread on an output signal from the orthogonal demodulator 103, a frame separator 106 for performing frame separation of an output from the despreader 104, a reception SIR calculator 110 for calculating a reception SIR based on the output from the despreader 104, a despreader 112 for performing despread on the output signal from the orthogonal demodulator 103, a Doppler frequency detector 114 for monitoring level fluctuation in the received signal after despread in the despreader 112 to detect a cycle and a phase of a Doppler frequency, a fading timing estimator 115 for receiving information of the cycle and the phase of the estimated Doppler frequency output from the Doppler frequency detector and 114 to estimate a next reception timing at which the reception level is lowered due to fading, and a transmission power determiner 116 which receives a timing signal from the fading timing estimator 115 and reliability information indicative of a SIR 8 obtained from the reception SIR calculator 110. The transmission power determiner 116 controls or determines a transmission power based on a decoding result of the transmission power control channel at a normal operation. The determined transmission power is stored in a memory 116A included in the transmission power determiner 116. On the other hand, the transmission power determiner 116 ignores the decoding result of the transmission power control channel 4 to perform transmission using the previous transmission power during the time interval when the reception signal level is lowered due to fading. The previous transmission power has been stored in the memory 116A.

Here, although a spread code used in the despreader 104 is a spread code for obtaining necessary information data, a spread code used in the despreader 112 is determined to be different from that used in the despreader 104.

While a received signal level of a channel despread by the despreader 104 is controlled using the transmission power control, a received signal level of a channel despread by the despreader 112 is not controlled because it does not include information data for the mobile communication apparatus and thus, the transmission power does not have to be controlled. Therefore, fluctuation in the received signal level due to fading can be accurately monitored by detecting the received signal level of the channel despread by the despreader 112.

As a result of monitoring, the Doppler frequency is estimated, and a timing deviation indicative of phase information from the Doppler frequency and reduction in the received signal level can be estimated. When it is determined based on the estimated value of the Doppler frequency and the phase information that a reception timing of the transmission power control channel 4 in the current frame is matched with a timing at which the reception signal level is lowered due to fading, the fading timing estimator 115 outputs data representing the timing of a level reduction due to fading to the transmission power determiner 116.

In a basic operation of the transmission power determiner 116, a transmission power Pt is determined in accordance with a transmission power control information 6 supplied from the frame separator 106, and a value corresponding to the transmission power Pt is output when the transmission power Pt is less than a maximum power Pmax. The output value is stored in the memory 116A. On the other hand, a value corresponding to the maximum power Pmax is output when the transmission power PL is not less than the maximum power Pmax. Similarly, the output value corresponding to the maximum power Pmax is stored in the memory 116A.

As another operation of the transmission power determiner 116, when the information indicative of the level reduction timing data 7 from the fading timing estimator 115 is data indicative of the level reduction due to fading and/or when it is determined based on the reliability information indicative of the SIR 8 from the reception SIR calculator 110 that the reliability of the data 8 is too low, the transmission power Pt calculated using the transmission power control information 6 is ignored and a previous transmission power Ppre is used. A value corresponding to the previous transmission power Ppre has been stored in the memory 116A when the transmission power determiner 116 performs the basic operation.

Therefore, when the level of the received signal 9 is lowered due to fading, the transmission power control is not carried out by using the transmission power control information 6 of the transmission power control channel 4. In this case, transmission power control is carried out by using a transmission power value set in cases where its reliability was high. Therefore, communication can be established without the considerable increase/decrease in the transmission power, and a quantity of interference in a service area due to the transmission power can be maintained constant, thereby obtaining such an advantage as that reduction in the capacity of subscribers can be suppressed.

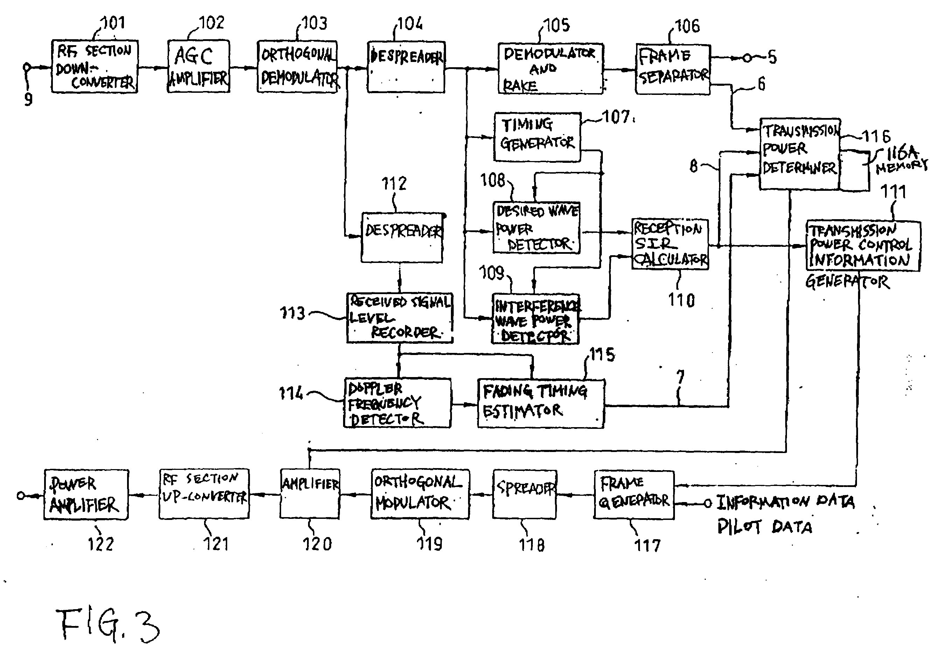

More detail structure of the CDMA transmission power controller according to the present invention will be discussed with reference to FIG. 3.

Referring to FIG. 3, the CDMA transmission power controller includes an RF section down-converter 101 for converting a high frequency received signal 9, which has been received through a radio wave, from a high frequency (RF) band to a base band, an automatic gain control (AGC) amplifier 102 for controlling a signal level output from the RF section down-converter 101 so as to obtain a fixed signal level, an orthogonal demodulator 103 for orthogonally detecting an output signal from the AGC amplifier 102, a despreader 104. e.g., a matched filter or a sliding correlator, for despreading a signal from the orthogonal demodulator 103, a demodulator and a Rake receiver 105 to which an output signal from the despreader 104 is input, and a frame separator 106 for separating an output signal from the demodulator and the Rake receiver 105 into information data 5 from the communication channel 3 and transmission power control information 6 from the transmission power control channel 4.

Further, an output signal from the despreader 104 is also input to a timing generator 107, a desired wave signal power detector 108, and an interference wave power detector 109 as well as the demodulator and the Rake receiver 105. The timing generator 107 detects a synchronization signal from the input signal and supplies a timing clock to the desired wave received signal power detector 109 and the interference signal power detector 109 based on the detected synchronization signal. The desired wave received signal power detector 108 detects a desired wave received signal power from the input signal based on the timing clock. The interference signal power detector 109 detects an interference signal power from the input signal based on the timing clock. A reception SIR 8 is calculated in the reception SIR calculator 110 based on these detection outputs of the detectors 108 and 109, and the reception SIR 8 which is a result of calculation is compared with a predetermined SIR in a transmission power control information generator 111 in order to satisfy the required reception quality, thereby determining transmission power control information to be given to the base station 1 as information.

An output from the orthogonal demodulator 103 is input to a despreader 112 provided in parallel to the above despreader 104 so that it is subjected to despread using a spread code different from that of the despreader 104 for the above mentioned reasons. As the spread code used in the despreader 112, announcement information represented by a perch channel, i.e., codes of a channel performing continuous transmission without the transmission power control are used. An output signal from the despreader 112 is input to a received signal level recorder 113. Output data from the received signal level recorder 113 is input to a Doppler frequency detector 114. An output from the Doppler frequency detector 114 is input to a fading timing estimator 115. An output from the fading timing estimator 115 is supplied to a transmission power determiner 116.

To the transmission power determiner 116 are supplied the transmission power control information 6 of the transmission power control channel 4 output from the frame separator 106, the SIR 8 output from the reception SIR calculator 110, and level reduction timing data 7 from the fading timing estimator 115. The transmission power determiner 116 determines the transmission power based on at least one of the transmission power control information 6, the SIR 8 and the level reduction timing data 7, and outputs the designation of the transmission power to an amplifier 120, thereby a transmission signal is transmitted at the determined transmission power. The determined transmission power is stored in the memory 116A.

Although the above has described a reception system of the CDMA transmission power controller, a transmission system will now be discussed hereinafter. A frame generator 117 receives information of the transmission power control channel 4 output from the transmission power control information generator 111, information data such as sound data and packet data, pilot data for estimating parameters of the transmission path and control data. An output signal from the frame generator 117 is subjected to code spread in a spreader 118 to be input to an orthegonal modulator 119. A power of a modulated signal output from the orthogonal modulator 119 is amplified in the amplifier 120 so that the modulated signal is transmitted with the power designated by the transmission power determiner 116. The modulated signal level-adjusted in the amplifier 120 is frequency-converted into a high frequency band signal in an RF section up converter 121 and power-amplified in the power amplifier 122 to be output to a non-illustrated antenna.

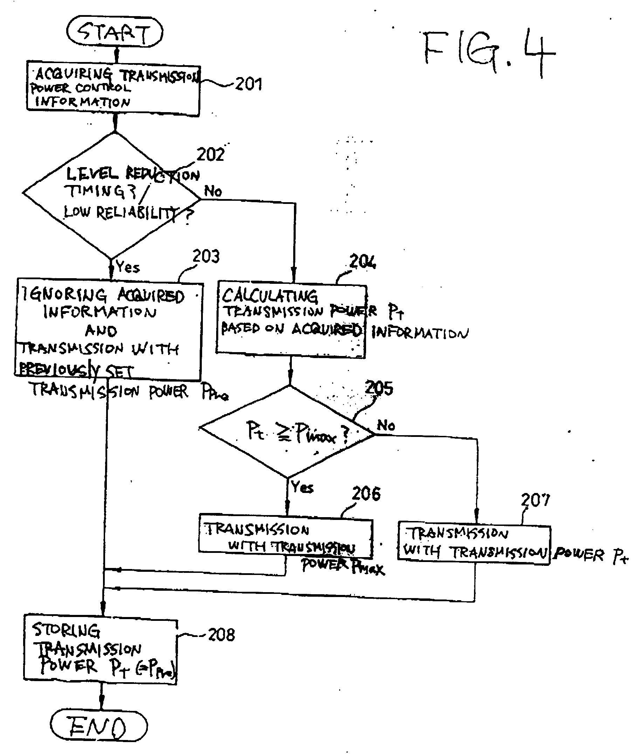

Next, an operation of this embodiment will now be discussed. Discussion will be first given on the operation of the transmission power determiner 116 with reference to FIGS. 3 and 4. Referring to FIG. 3, since the frame separator 106 separates the signal demodulated in the demodulator and the Rake receiver 105 into the information data 5 of the communication channel 3 and the transmission power control information 6 of the transmission power control channel 4, the transmission power determiner 116 receives the transmission power control information 6 of the transmission power control channel 4. Moreover, the transmission power determiner 116 receives the reduction timing data 7 indicative of the received signal level reduction timing output from the fading timing estimator 115 and the reception SIR 8 output from the reception SIR calculator 110 to execute its operation.

In a basic operation of the transmission power determiner 116, a transmission power Pt is determined in accordance with a transmission power control information 6 supplied from the frame separator 106, and a value corresponding to the transmission power Pt is output when the transmission power Pt is less than a maximum power Pmax. The output value is stored in the memory 116A. On the other hand, a value corresponding to the maximum power Pmax is output when the transmission power Pt is not less than the maximum power Pmax. Similarly, the output value corresponding to the maximum power Pmax is stored in the memory 116A.

As an another operation of the transmission power determiner 116, when the SIR 8 output from the reception SIR calculator 110 is compared with a threshold value and is less than the threshold value, thereby it is determined that the reliability of the reception signal is too low, and/or when the level reduction timing data 7 from the fading timing estimator 115 is the timing data representing occurrence of the level reduction due to fading, the transmission power Pt calculated based on the received transmission power control information 6 is ignored. In this case, the previous transmission power Ppre which has been stored in the memory 116A is used without making any change for transmission. The previous transmission power Ppre is stored in the memory 116A when the transmission power determiner 116 executes the above basic operation. The transmission control is carried out without using the transmission power control information 6 which is received when the reception level is lower than a predetermined level due to fading. Therefore, execution of incorrect transmission power control based on the the transmission power control information 6 which includes error due to fading is prevented, thereby the transmission power control is executed without the considerable decrease or increase in the level of the transmission power. This transmission power control can prevent the increase in quantity of interference or the prominent degradation of the transmission path quality.

Although the SIR 8 of the received signal is illustrated as the reliability information in this embodiment, the similar advantage can be obtained by using a bit error ratio of a known data pattern, for example, pilot pattern, as the reliability information.

Referring to FIG. 4, the transmission power control information 6 of the transmission power control channel 4 is acquired from the frame separator 106 in the step 201. Subsequently, it the step 202, the level reduction timing data 7 output from the fading timing estimator 115 and the reliability information (SIR 8) obtained from the reception SIR calculator 110 are input to the transmission power determiner 116 to determine whether the current timing is the level reduction timing due to fading and/or whether the reliability of the reception signal including the transmission power control information 6 is lower than a predetermined value. If the current timing is the level reduction timing due to fading and/or the reliability of the reception signal is lower than the predetermined value (Yes in the step 202), the processing in the step 203 is carried out in the transmission power determiner 116. That is, the transmission power control information 6 which is received at the current timing is ignored for current transmission power control because the information 6 may include an error. Instead, the previously set transmission power Ppre which is stored in the memory 116A is output to the amplifier 120 as the transmission power Pt. On the other hand, if the current timing is not the level reduction timing due to fading or the timing when the reliability of the reception signal is not lower than the predetermined value (No in the step 202), the processing in the step 204 is performed in the transmission power determiner 116. That is, the transmission power Pt is calculated in accordance with the acquired transmission power control information 6 of the transmission power control channel 4. A result of calculation is compared with the maximum value Pmax of the transmission power in the step 205. If the transmission power Pt is not less than the maximum value Pmax (Yes in the step 205), the maximum power Pmax is output to the amplifier 120 as the transmission power Pt. If the transmission power Pt is less than the maximum power Pmax (No in the step 205), the transmission power Pt of the calculation result is output to the amplifier 120 in the step 207. At last, in the step 208, the current transmission power Pt is stored in the memory 116A as the previous transmission power Ppre. The maximum transmission power Pmax is previously stored in a memory (not shown).

An operation of the received signal level recorder 113 will now be discussed. Referring to FIG. 3, the received signal level recorder 113 calculate, the reception power to each symbol data which is despread from the chip rate to the symbol rate in the despreader 112 so that the calculation results are recorded. Obtaining the history of the reception power in each symbol data can increase the frequency estimation accuracy when the reception level falls due to fading.

An operation of the Doppler frequency detector 114 will now be discussed. Referring to FIG. 3, the Doppler frequency detector 114 receives the history of the received signal level indicative of the reception power recorded in the received signal level recorder 113 and estimates the Doppler frequency based on an interval in which the received a signal level is reduced based on the history information. That is, the Doppler frequency can be obtained by averaging the intervals in which the level reduction occurs. Further, a timing deviation indicative of the phase information of the current reception timing with respect to the received signal level reduction is calculated based on the interval in which the received signal level is lowered, and the Doppler frequency and the phase information are output to the fading timing estimator 115.

Discussion will be given on the fading timing estimator 115. Referring to FIG. 3, the fading timing estimator 115 receives the phase information and the Doppler frequency output from the Doppler frequency detector 114, and estimates a timing when the reception power level is lower than a predetermined level due to fading based on the Doppler frequency and the phase information. The estimated timing is supplied to the transmission power determiner 116 as the level reduction timing data 7. When the transmission power determine 116 determines that the transmission power control information 6 is received at the estimated timing, the transmission power control information 6 is not used for calculating the transmission power at the estimated timing.

As a method for increasing the fading timing estimation accuracy in the fading timing estimator 115, the received signal level information can be used. The operation in such a case will be discussed. The fading timing estimator 115 receives the timing deviation indicative of the phase information of the current reception timing with respect to the received signal level reduction and the Doppler frequency output from the Doppler frequency detector 114 and estimates the timing of the reception power level reduction caused by fading based on the Doppler frequency and the phase information. In addition, a timing at which the level of the actually received signal is lowered is determined using a threshold value based on history information of the reception power in each symbol input from the received signal level recorder 113. These two timings are supplied to the transmission power determiner 116 as the level reduction timing data 7. In the transmission power determiner 116, it is determined that the reception timing of the transmission power control channel 4 in the communication channel 3 is substantially coincidence with the timing indicated by the level reduction timing data 7. As described above, taking into consideration influence of reduction in level of the actually received signal, the transmission power control can be prevented from erroneously being performed even in the accidental reception level lowering due to change in the propagation path such fading.

According to the present invention, even if a decoding error is generated in information for a transmission power control channel due to reduction in a reception level or interference owing to fading and the like in the transmission power control, an erroneous operation due to such an error can be avoided because erroneous transmission power control information is not used. Moreover, increase in quantity of interference of a signal received by a base station or degradation of a transmission path due to an excessive increase/decrease of a transmission power is suppressed, thereby sufficiently assuring a data transmission quality and a capacity of subscribers in a cell.

The invention may be embodied in other specific forms without departing from the spirit or essential characteristics thereof. The present invention embodiments are therefore to be considered in al respects as illustrative and not restrictive, the scope of the invention being indicated by the appended claims rather than by the foregoing description and all changes which come within the meaning and range of equivalency of the claim, are therefore intended to be embraced therein.

## Claims

1. A communication apparatus, comprising:
a receiver that receives a signal including transmission power control information;
a timing estimator that estimates a level reduction timing when a reception level of the signal is lower than a predetermined level; and
a transmission power controller coupled to said receiver and said timing estimator, that determines a transmission power without using the transmission power control information which is received at the level reduction timing estimated by said timing estimator.

2. The communication apparatus as claimed in claim 1, wherein said transmission power controller ignores the transmission power control information which is received at the level reduction timing.

3. The communication apparatus as claimed in claim 1, wherein said transmission power controller determines the transmission power based on another transmission power control information which was received at a timing which is different from the level reduction timing at the level reduction timing.

4. The communication apparatus as claimed in claim 1, 2 or 3, further comprising:
a storage unit that stores a value indicative of the transmission power determined by said transmission power controller as a previous transmission power,
wherein said transmission power controller determines the transmission power at the level reduction timing using the previous transmission power which is stored in said storage unit.

5. The communication apparatus as claimed in claim 1, 2, 3 or 4, further comprising:
a reliability determiner that determines whether the reliability of the signal is higher than a predetermined value;
wherein said transmission power controller determines the transmission power based on the determination result of said reliability determiner.

6. The communication apparatus as claimed in claim 5, wherein the reliability of the signal is determined based on a signal-to-interference plus noise power ratio.

7. The communication apparatus as claimed in claim 5 or 6, wherein said transmission power controller ignores the transmission power control data received by said receiver when the reliability of the signal is not higher than the predetermined level.

8. The communication apparatus as claimed in claim 5, 6 or 7, further comprising:
a first despreader coupled to said receiver, performing despread on the signal to output a first despread signal to said reliability determiner; and
a second despreader coupled to said receiver, performing despread on the signal to output a second despread signal to said timing estimator.

9. The communication apparatus as claimed in claim 8, wherein a spread code used by said first despreader is different from a spread code used by said second despreader.

10. The apparatus as claimed in any one of claims 1 to 9,
wherein said timing estimator comprises;
a Doppler frequency detector that detects a Doppler frequency of the signal by monitoring fluctuation of the reception level of the signal; and
an estimator that estimates the level reduction timing when the reception level of the signal is lower than the predetermined level, based on the Doppler frequency of the signal,
wherein said transmission power controller determines the transmission power based on information indicative of the level reduction timing.

11. The communication apparatus as claimed in claim 10, further comprising:
a reception level data storage unit that stores a reception power level of the signal by each symbol data of the signal,
wherein said Doppler frequency detector detects the Doppler frequency of the signal based on the reception power level stored in said reception level data storage unit.

12. The apparatus as claimed in any one of claims 1 to 11,
further comprising;
a radio communication unit that executes a code division multiple access communication.

13. A mobile communication system, comprising:
a base station that transmits transmission power control information;
a mobile station that receives the transmission power control information and transmits date to the base station with a transmission power which is determined based on the transmission power control information; wherein
said mobile station comprises:
an timing estimator estimating a level reduction timing when a reception level of the transmission power control information is lower than a predetermined level; and
a transmission power determiner determining the transmission power without using the transmission power control information which is received at the level reduction timing.

14. The communication system as claimed in claim 13, wherein said mobile station communicates with said base station using a code division multiple access protocol.

15. The communication system as claimed in claim 13 or 14,
wherein a communication channel and a control channel for transmitting the transmission power control information are provided in parallel.

16. A method for controlling transmission power of a communication apparatus, comprising:
receiving a signal having transmission power control information;
estimating a level reduction timing when a reception level of the signal is lower than a predetermined level; and
controlling transmission power without using the transmission power control information which is received at the level reduction timing.

17. The method as claimed in claim 16, further comprising:
storing a value indicative of the transmission power in a storage unit.

18. The method as claimed in claim 17, further comprising:
ignoring the transmission power control information at the level reduction timing; and
reading out the value indicative of the transmission power which was stored in the storage unit at a timing prior to the level reduction timing.

19. The method as claimed in claim 16, 17 or 18, further comprising:
obtaining reliability information indicating whether the reliability of the signal is higher than a predetermined value; and
controlling a transmission power based on the transmission power control data, the fluctuation of the reception level and the reliability information.

20. The method as claimed in claim 16, 17, 18 or 19, further comprising:
receiving a communication channel including user information and a control channel including the transmission power control information, wherein the communication channel and the control channel are provided in parallel.
